# EUROPEAN PATENT SPECIFICATION

(11) **EP 3 588 826 B1**
(45) Date of publication and mention of the grant of the patent: **30.12.2020**
(21) Application number: 19164846.8
(22) Date of filing: 25.03.2019
(51) Int. Cl.: H04L 1/16, H04L 29/06, H04L 1/20

(54) **TRANSMISSION FRAME COUNTER**
ÜBERTRAGUNGSRAHMENZÄHLER
COMPTEUR DE TRAME DE TRANSMISSION

(30) Priority: 29.06.2018 US 201816023261
(43) Date of publication of application: 01.01.2020
(73) Proprietor: Hewlett Packard Enterprise Development LP, Houston, TX 77070 (US)
(72) Inventor: KHOLAIF, Ahmad, Santa Clara, CA 95054 (US); HU, Wei, Santa Clara, CA 95054 (US)
(74) Representative: Haseltine Lake Kempner LLP

(56) References cited:
- US-A1- 2007 005 985
- VAISHALI MOHITE ET AL: "Cooperative Security Agents for MANET", INFORMATION AND COMMUNICATION TECHNOLOGIES (WICT), 2012 WORLD CONGRESS ON, IEEE, 30 October 2012 (2012-10-30), pages 549-554, XP032301639, DOI: 10.1109/WICT.2012.6409138 ISBN: 978-1-4673-4806-5

## Description

### Background

Wireless networks may provide various types of communication to multiple users through the air using electromagnetic waves. As a result, various types of communication may be provided to users without cables, wires, or other physical electric conductors to couple devices in the wireless network. Examples of the various types of communication that may be provided by wireless networks include voice communication, data communication, multimedia services, etc. Wireless networks may include network devices such as access points (APs), which may communicate with each other to detect other APs and/or user devices.

The paper "Cooperative Security Agents for MANET" by Vaishali Mohite and Lata Ragha published by the IEEE in "2012 World Congress on Information and Communication Technologies" describes a mobile ad hoc network (MANET) as a collection of autonomous nodes that communicate with each other by forming a multi-hop radio network and maintaining connections in a decentralized manner, and presents a detecting mechanism against a coordinated attack by cooperative blackhole nodes in a MANET plus a method to secure the history records of packet delivery information at each contact so that other nodes can detect insider attacks (grayhole attack) by analyzing these packet delivery records and avoid the blackhole and the cooperative blackhole attacks by using Cooperative Security Agents.

### Brief Description of the Drawings

Figure 1 illustrates a block diagram in the form of an example apparatus including a frame determination component consistent with the disclosure.
Figure 2 illustrates a block diagram in the form of an example system including a transmission frame failure counter consistent with the disclosure.
Figure 3 illustrates an example timing diagram of frames transmitted by a station (STA) and a network device over time consistent with the disclosure.
Figure 4 illustrates another example timing diagram of frames transmitted by a station (STA) and a network device over time consistent with the disclosure.
Figure 5 illustrates an example machine-readable medium for a transmission frame counter consistent with the disclosure.
Figure 6 illustrates an example flow diagram for a transmission frame counter consistent with the disclosure.

### Detailed Description

An example of a wireless network is a wireless local area network (WLAN). As used herein, the term "wireless local area network (WLAN)" can, for example, refer to a communications network that links two or more devices using some wireless distribution method (for example, spread-spectrum or orthogonal frequency-division multiplexing radio), and usually providing a connection through an access point to the Internet; and thus, providing users with the mobility to move around within a local coverage area and still stay connected to the network. WLANs may include multiple stations (STAs), controllers (e.g., WLAN controller(s)), and/or network devices such as access points (APs) that may communicate over wireless channels. An AP may be a networking hardware device that allows a wireless-compliant device (e.g., a STA) to connect to a network, while a controller may perform configuration operations and/or authentication operations on APs and/or STAs.

The STAs and/or APs may each include a radio to communicate and/or exchange information over the wireless channels. As used herein, the term "information" can, for example, refer to data, address, control, management (e.g., statistics) or any combination thereof. For transmission, information may be transmitted as a message, namely a collection of bits in a predetermined format. One type of message, namely a wireless message, includes a header and payload data having a predetermined number of bits of information. The wireless message may be placed in a format such as packets, frames, or cells. As used herein, the term "radio" can, for example, refer to an antenna or aerial which converts electric power into electromagnetic waves and vice versa.

An AP may provide connectivity with a network such as the Internet to the STAs. As used herein, the term "AP" can, for example, refer to receiving points for any known or convenient wireless technology which is known, or which may later become known. Specifically, the term AP is not intended to be limited to Institute of Electrical and Electronics Engineers (IEEE) 802.11-based APs. APs generally function as an electronic device that is adapted to allow wireless devices to connect to a wired network via various communications standards. As used herein, the term "STA" can, for example, refer to a device that has the capability to use the Institute of Electrical and Electronics Engineers (IEEE) 802.11 protocol. Examples of STAs include smart phones, laptops, physical non-virtualized computing devices, personal digital assistants, phablets, wearables, etc. In some examples, a STA may be a device that contains an IEEE 802.11-conformant media access control (MAC) and physical layer (PHY) interface to a wireless medium (WM). As used herein, the term "controller" can, for example, refer to a WLAN controller that performs load balancing operations, authentication operations, interference detection and avoidance operations, and/or coverage hole detection and correction operations for the network.

Wireless networks such as WLANs can use various wireless communication technologies. In some examples, WLANs can use orthogonal frequency division multiplexing (OFDM). In an OFDM based wireless network, a data stream is split into multiple data substreams. Such data substreams may be sent over different OFDM subcarriers, which can be referred to as tones or frequency tones. Some wireless networks may use a single-in-single-out (SISO) communication approach, where each STA and/or AP uses a single antenna. Other wireless networks may use a multiple-in-multiple-out (MIMO) communication approach, where a STA and/or AP uses multiple transmit antennas and multiple receive antennas. For example, some wireless networks may include controllers, APs, and/or STAs that may be used to facilitate communication in the network. Such networks may allow for multiple user (MU) MIMO communication. WLANs such as those defined in the IEEE wireless communications standards (e.g., IEEE 802.11a, IEEE 802.11n, IEEE 802.11ac, etc.), can use OFDM to transmit and receive signals. Moreover, WLANs, such as those based on the IEEE 802.11n or IEEE 802.11ac or IEEE 802.11ax standards, can use OFDM/OFDMA and MIMO.

In some examples, APs and/or radios may transmit and/or receive signals to determine information associated with other APs, STAs, and/or radios that are within a particular geographic area. The particular geographic area may be referred to as a neighborhood or a radio-frequency (RF) neighborhood.

Although many of the signals received and/or transmitted between APs and STAs are utilized by the APs and STAs to facilitate communication between such devices in the RF neighborhood, some signals that are intended to disrupt communications between devices in the RF neighborhood may be transmitted and/or received by the APs and/or STAs. An example of such signals may occur in relation to a denial of service (DoS) attack, which may be performed by STAs in the RF neighborhood. A DoS attack may refer to a scenario in which a malicious actor carries out a cyber-attack by temporarily or indefinitely disrupting services of a network device connected to the WLAN (e.g., associated to an AP in the WLAN).

An example of a DoS attack that may be carried out in a WLAN may involve STAs in the WLAN transmitting block acknowledgment (ACK) frames including an invalid starting sequence number (SEN) to the AP. As used herein, a block ACK frame is a frame that can be used to acknowledge multiple media access control protocol data units (MPDUs) in a single frame. In some examples, a block ACK frame may contain a bitmap size of 64 *x* 16, where the 16 bits account for the number of MPDUs to be acknowledged. In general, the SEN of the block ACK frame indicates that data transmitted with the frame has been received to a specific byte.

By altering the SEN such that the SEN of the block ACK is invalid, a STA can, in response to data received from the AP, transmit frames to the AP indicating that the frames transmitted by the AP to the STA were not successfully received. In accordance with the IEEE 802.11 protocol, the AP may then retry transmission of the previously transmitted frames until a successful block ACK (e.g., a block ACK with a valid SEN) is transmitted by the STA or until a retry limit has been reached.

In some approaches, when the AP retries transmission of the previously transmitted frames in response to receipt of a block ACK with an invalid SEN, the PHY rate and/or modulation and coding scheme (MCS) used by the AP may be altered in an attempt to obtain a higher reception probability at the STA. For example, the MCS may be lowered on successive retry attempts, which may lead to the same frame incurring a longer channel time as opposed to a scenario in which the frame is transmitted at a higher MCS.

In such approaches, if the STA continues to transmit block ACKs with invalid SENs to the AP, the AP may continue to retry transmission of frames designated for the STA that is or has transmitted the block ACK(s) with the invalid SEN(s), which may cause the channel busy time of the AP to increase. This may reduce performance of the AP and/or throughput per channel of the AP, which may in turn give rise to resource starvation for other STAs in the RF neighborhood of the effected.

In contrast, examples described herein may provide an AP with various schemes for identifying and/or protecting against DoS attacks based on transmission of block ACK frames with invalid SENs transmitted from STAs associated to the AP. For example, as described herein, a counter (e.g., a frame failure counter) may be provided to the AP. The counter may be incremented in response to receipt of block ACK frame including invalid SENs. In some examples, the AP may transmit a deauthentication frame to the STA to disassociated the STA from the AP in response to receipt of a threshold number of block ACK frames including invalid SENs as counted by the counter.

In another example, the AP may transmit a block ACK request in response to receipt of a threshold number of block ACK frames including invalid SENs as counted by the counter. The counter may be incremented in response to receipt of a block ACK frame with a valid SEN that is received in response to the block ACK request transmission. If subsequent block ACK frames received by the AP contain invalid SENs, the counter may be further incremented and, in response to receipt of a threshold number of block ACK frames including invalid SENs, the AP may transmit a deauthentication frame to the STA to disassociate the STA from the AP. In this example, the counter is incremented in response to receipt of the block ACK including the valid SEN to combat scenarios in which the block ACK is tweaked to provide a valid SEN in order to avoid deauthentication by the AP and then subsequently altered to an invalid SEN to continue the DoS attack.

By deauthenticating a STA whose invalid SEN count has exceeded the threshold, performance of the AP may be increased in comparison to approaches in which a counter is not employed to count received transmission frames containing in valid SENs. For example, channel time used by the AP may be reduced and/or throughput of AP channels may be improved by deauthenticating a STA whose invalid SEN count has exceeded the threshold. In addition, RF resource starvation to other STAs in the RF neighborhood may be alleviated based on the increased performance of the AP.

Examples of the disclosure include apparatuses, methods, and systems for related to a transmission frame counter. In some examples, an apparatus may comprise a processing resource operatively coupled to a memory resource and a frame determination component operatively coupled to the processing resource and the memory resource. The frame determination component may cause a counter corresponding to a particular station (STA) associated to the apparatus to be stored in the memory resource, the counter to be incremented in response to receipt of a transmission frame containing an invalid starting sequence number (SEN) and a deauthentication frame to be transmitted in response to receipt of a threshold number of transmission frames containing the invalid SEN.

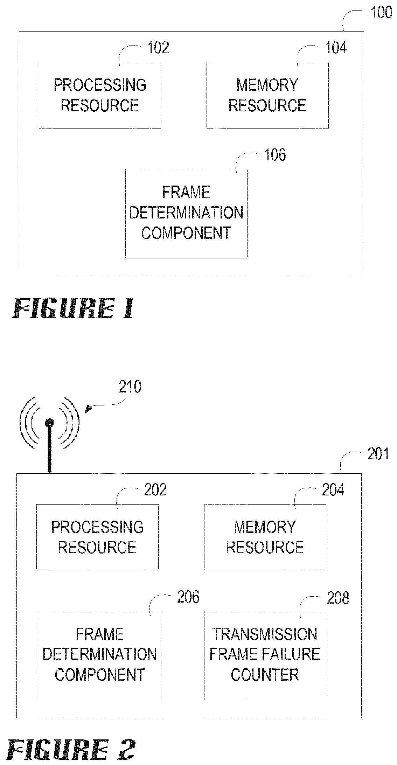

Figure 1 illustrates a block diagram in the form of an example apparatus 100 including a frame determination component 106 consistent with the disclosure. As shown in Figure 1, the apparatus 100 may include a processing resource 102, a memory resource 104, and a frame determination component 106. The processing resource 102, the memory resource 104, and/or the frame determination component 106 may be operatively coupled to one another such that information may be transmitted between them. The apparatus 100 may be a network device such as an AP, a switch, a router, or other WLAN network device. In some example, the processing resource 102, the memory resource 104, and/or the frame determination component 106 may be separately be considered an "apparatus."

The frame determination component 106 may include hardware that may execute instructions to perform certain tasks and/or functions. For example, the frame determination component 106 may cause a counter (e.g., the transmission frame failure counter 208 illustrated and discussed in connection with Figure 2, herein) to be stored in the memory resource. Examples are not so limited, however, and the frame determination component 106 may be an integrated circuit (e.g., an application-specific integrated circuit, field programmable gate array, etc.), logic, etc. communicatively coupled to the processing resource 102 and/or the memory resource 104 that may carry out the tasks and/or functions described herein.

The frame determination component may cause the counter to be incremented in response to receipt of a transmission frame containing an invalid starting sequence number (SEN). The transmission frame containing the invalid SEN may be a block acknowledgement (ACK) frame. As described above, the apparatus 100 may comprise an AP, which may further include an antenna or an antenna array (e.g., the antenna 210 illustrated and described in connection with Figure 2, herein). In some examples, the antenna may be used to receive the transmission frames containing the invalid SENs.

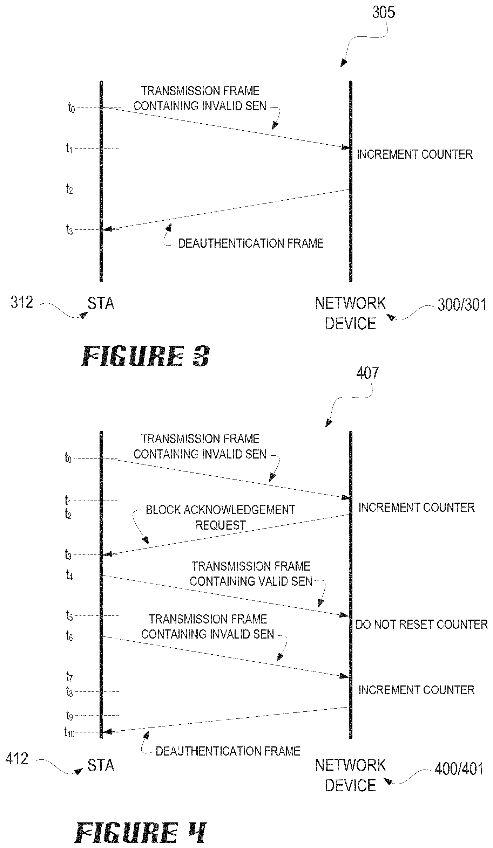

In some examples, the frame determination component 106 may cause the counter to be incremented monotonically in response to the apparatus 100 receiving a transmission frame that contains an invalid SEN. In some examples, the transmission frame containing the invalid SEN may be received to the apparatus 100 from a STA (e.g., STA 312 illustrated in Figure 3 or STA 412 illustrated in Figure 4, herein) associated to the apparatus 100.

The frame determination component 106 may cause a deauthentication frame to be transmitted in response to receipt of a threshold number of transmission frames containing the invalid SEN. For example, the frame determination component 106 may transmit a deauthentication frame (or cause a deauthentication frame to be transmitted) from the apparatus 100 to a STA associated to the apparatus 100 once the counter has reached the threshold number of transmission frames containing the invalid SEN. In some examples, the antenna (e.g., antenna 210) may be used to transmit the deauthentication frame from the apparatus 100 to the STA associated to the AP.

The frame determination component 106 may cause transmission frames received subsequent to transmission of the deauthentication frame to be blocked. For example, the frame determination component 106 may add identifying information corresponding to the STA that is transmitting the transmission frames containing the invalid SENs to be added to a media access control (MAC) blacklist so that the STA is unable to re-associate to the apparatus 100. The STA may be added to the MAC blacklist for a predetermined amount of time, a configurable amount of time, or may be blocked from re-associating to the apparatus 100 indefinitely.

The threshold number may be predetermined, or the threshold number may be dynamically determined based on conditions of a RF neighborhood in which the apparatus 100 is deployed. In some examples, the threshold number may be around 450, however, examples are not so limited, and the threshold number may be greater than 450 or less than 450.

The frame determination component 106 may cause a block acknowledgement (ACK) request to be transmitted in response to receipt of the threshold number of transmission frames containing the invalid SEN. For example, in response to the counter being incremented to a number greater than the threshold number in response to receipt of transmission frames containing the invalid SEN, the frame determination component 106 may transmit a block ACK request (or cause a block ACK request to be transmitted) from the apparatus 100 to a STA associated to the apparatus 100.

In some examples, the frame determination component 106 may cause the counter stored by the memory resource 104 to not be incremented in response to receipt of a transmission frame containing a valid SEN subsequent to transmission of the block ACK request. However, the frame determination component 106 may cause the counter stored by the memory resource 104 to not be reset in response to receipt of a transmission frame containing a valid SEN subsequent to transmission of the block ACK request. Examples are not so limited, however, and in some examples, the frame determination component 106 may cause the counter stored by the memory resource 104 to be incremented in response to receipt of a transmission frame containing an invalid SEN subsequent to transmission of the block ACK request.

In some examples, incrementing the counter responsive to transmission frames received in response to the block ACK request frame may allow the apparatus 100 to determine a number of attempted transmission frames versus a number of successful transmission frames, which may, in turn, reduce the possibility that a STA sending the transmission frames temporarily transmits a transmission frame with a valid SEN to trick the apparatus 100 into continuing to receive subsequent transmission frames that may include invalid SENs. Stated alternatively, by incrementing the counter in response to both transmission frames containing invalid SENs and transmission frames containing valid SENs that are sent in response to a block ACK request, the apparatus 100 may identify and prevent DoS attacks from a STA transmitting the counted transmission frames.

Figure 2 illustrates a block diagram in the form of an example system 201 including a transmission frame failure counter 208 consistent with the disclosure. As shown in Figure 2, the system 201 may include a processing resource 202, a memory resource 204, a frame determination component 206, a transmission frame failure counter 208, and/or an antenna 210. In some examples, the system 201 may be analogous to the apparatus 100 illustrated in Figure 1. The system 201 may be a network device such as an AP, router, network switch, etc., as described herein. The processing resource 202, the memory resource 204, the frame determination component 206, the transmission frame failure counter 208, and/or the antenna 210 may be referred to separately or in various combinations as a "system" or an "apparatus."

The frame determination component 206 may be coupled (e.g., operatively coupled) to the processing resource 202, the memory resource 204, the transmission frame failure counter 208, and/or the antenna 210. In some examples, the transmission frame failure counter 208 may be stored in the memory resource 204, however, examples are not so limited, and the transmission frame failure counter 208 may, in some examples, include memory resources separate from the memory resource 204. Although shown as a single transmission frame failure counter 208 in Figure 2, examples are not so limited, and the transmission frame failure counter 208 may comprise a plurality of transmission frame failure counters. In such examples, each transmission frame failure counter may correspond to a different STA that is associated to the system 201.

In some examples, the antenna 210 may receive transmission frames (e.g., block ACK frames) from a STA associated to the system 201. For example, the antenna 210 may be a radio or aerial that can receive electromagnetic waves corresponding to the transmission frames and convert the electromagnetic waves into a signal that can be understood by other components of the system 201. As described above, the transmission frames may be block ACK frames that include an invalid SEN.

In some examples, the frame determination component 206 may cause a determination to be made that a transmission frame includes an invalid starting sequence number (SEN). The frame determination component 206 may cause the transmission frame failure counter 208 to be incremented in response to the determination that the transmission frame includes the invalid SEN.

The frame determination component 206 may cause a block acknowledgement (ACK) request to be transmitted in response to receipt of a threshold number of transmission frames containing the invalid SEN. For example, in response to the counter being incremented to a number greater than the threshold number in response to receipt of transmission frames containing the invalid SEN, the frame determination component 206 may transmit a block ACK request (or cause a block ACK request to be transmitted) from the system 201 to a STA associated to the system 201.

In some examples, the frame determination component 206 may cause the transmission frame failure counter 208 to not be incremented in response to receipt of a transmission frame containing a valid SEN subsequent to transmission of the block acknowledgement request, as described in more detail in connection with Figures 3 and 4, herein. However, the frame determination component 206 may cause the transmission frame failure counter 208 to not be reset in response to receipt of a transmission frame containing a valid SEN subsequent to transmission of the block acknowledgement request.

Subsequent to receipt of the block ACK frame received in response to transmission of the block ACK request fame, the frame determination component 206 may cause a deauthentication frame to be transmitted. The deauthentication frame may be transmitted to a STA associated to the system 201, as described above. The deauthentication frame may disassociate the STA from the system 201 such that the STA is no longer able to send transmission frames to the system 201. Examples are not so limited, however, and the system may receive additional transmission frames subsequent to receipt of the transmission frame received in response to the block ACK request frame, but prior to transmission of the deauthentication frame.

For example, the frame determination component 206 may continue to increment the transmission frame failure counter 208 responsive to receipt of transmission frames received subsequent to receipt of the transmission frame received in response to the block ACK request frame. Stated alternatively, in some examples, the transmission frame failure counter 208 may not be reset responsive to receipt of a block ACK frame containing a valid SEN in response to the block ACK request frame. As a result, in some examples, the frame determination component 206 may continue to cause the transmission frame failure counter 208 to be incremented until a threshold number of transmission frames (e.g., transmission frames containing an invalid SEN, transmission frames containing a valid SEN that are received in response to the block ACK request, and transmission frames containing an invalid SEN received subsequent to receipt of the transmission frame containing a valid SEN that are received in response to the block ACK request) has been reached prior to transmitting the deauthentication frame.

In some examples, the threshold number may be based on a number of transmission frames that include the invalid SEN and/or the valid SEN responsive to the block ACK request. For example, the threshold number may be based, at least in part, on a quantity of attempted transmission frames (e.g., transmission frames containing an invalid SEN) and a quantity of successful transmission frames (e.g., transmission frames containing a valid SEN sent in response to the block ACK request).

The frame determination component 206 may determine a source (e.g., a STA from which the transmission frames originate) of the transmission frames that include the invalid SEN and cause information corresponding to the source to be stored in a MAC blacklist stored in the memory resource 204. In some examples, once the threshold number of received transmission frames has been reached, the frame determination component 206 may block further traffic from the source of the transmission frames. The source may be blocked for a configurable or predetermined period of time, or the source may be blocked indefinitely from associating to the system 201.

Figure 3 illustrates an example timing diagram 305 of frames transmitted by a station (STA) 312 and a network device 300/301 over time consistent with the disclosure. The STA 312 can be a smart phone, laptop, virtual computing instance, physical non-virtualized computing device, personal digital assistant, phablet, etc. that may be associated (e.g., connected and authenticated) to the network device 300/301. In some examples, the network device 300/301 may be analogous to the apparatus 100 illustrated in Figure 1 and/or the system 201 illustrated in Figure 2, herein. For example, the network device 300/301 may be an AP, switch, router, etc.

At time t₀, the STA 312 may transmit a transmission frame to the network device 300/301. The transmission frame may contain an invalid SEN. Upon receipt of the transmission frame containing the invalid SEN at t₁, the network device 300/301 may increment a counter stored thereon. In some examples, the counter may be analogous to the transmission frame failure counter 208 illustrated in Figure 2.

After the counter is incremented, the network device 300/301 may determine whether the counter has reached a threshold number. The threshold number may correspond to a number of transmission frames containing an invalid SEN received by the network device 300/301, as described herein. If the network device 300/301 determines that the counter has not reached the threshold number of received transmission frames containing the invalid SEN, the network device 300/301 may receive a subsequent transmission frame from the STA 312. In some examples, when a STA is deauthenticated, all transmissions to and receptions from the STA are stopped.

However, if the network device 300/301 determines that the counter has been incremented to the threshold number of received transmission frames containing the invalid SEN, at time t₂, the network device 300/301 may transmit a deauthentication frame to the STA 312, which may be received by the STA 312 at time t₃. In some examples, the deauthentication frame may cause the STA 312 to be disassociated from the network device 300/301.

By disassociating the STA 312 from the network device 300/301 in response to receipt of a threshold number of transmission frames containing an invalid SEN, performance of the network device 300/301 may be improved in comparison to approaches in which the STA 312 is not disassociated from the network device 300/301 in response to receipt of a threshold number of transmission frames containing an invalid SEN. For example, channel busy time of the network device 300/301 may be reduced by disassociating the STA 312 from the network device 300/301 in response to receipt of a threshold number of transmission frames containing an invalid SEN, which may allow for a decrease in RF resource starvation in comparison to approaches in which the STA 312 is not disassociated from the network device 300/301 in response to receipt of a threshold number of transmission frames containing an invalid SEN.

Figure 4 illustrates another example timing diagram 407 of frames transmitted by a station (STA) 412 and a network device 400/401 over time consistent with the disclosure. The STA 412 can be a smart phone, laptop, virtual computing instance, physical non-virtualized computing device, personal digital assistant, phablet, etc. that may be associated (e.g., connected and authenticated) to the network device 400/401. In some examples, the network device 400/401 may be analogous to the apparatus 100 illustrated in Figure 1 and/or the system 201 illustrated in Figure 2, herein. For example, the network device 400/401 may be an AP.

At time t₀, the STA 412 may transmit a transmission frame to the network device 400/401. The transmission frame may contain an invalid SEN. Upon receipt of the transmission frame at t₁, the network device 400/401 may increment a counter stored thereon. In some examples, the counter may be analogous to the transmission frame failure counter 208 illustrated in Figure 2.

After the counter is incremented, the network device 400/401 may determine whether the counter has reached a threshold number. The threshold number may correspond to a number of transmission frames containing an invalid SEN received by the network device 400/401, as described herein. If the network device 400/401 determines that the counter has not reached the threshold number of received transmission frames containing the invalid SEN, the network device 400/401 may receive a subsequent transmission frame from the STA 412. In some examples, the counter may be further incremented responsive to receipt of the subsequent transmission frame containing the invalid SEN.

As described above, the transmission frames containing the invalid SEN may received by the network device 400/401 in response to frames transmitted by the network device 400/401 to the STA 412. For example, when the STA 412 is associated to the network device 400/401, the STA transmits frames to and receives frames from the network device 400/401. By transmitting frames that contain an invalid SEN to the network device 400/401, the STA 412 may attempt to carry out a DoS attack on the network device 400/401 by indicating to the network device 400//401 that the STA 412 has not received frames successfully from the network device 400/401. This may, in turn, cause the network device 400/401 to continue to transmit frames to (and receive frames from) the STA 412, which may negatively impact performance of the network device 400/401.

However, if the network device 400/401 determines that the counter has been incremented to the threshold number of received transmission frames containing the invalid SEN, at time t₂, the network device 400/401 may transmit a block acknowledgement (ACK) request frame to the STA 412. The block ACK request frame may be received by the STA 412 at time t₃.

In response to receipt of the block ACK request frame, the STA 412 may, at time t₄, transmit a transmission frame to the network device 400/401, which may be received by the network device 400/401 at time t₅. In some examples, the transmission frame transmitted by the STA 412 in response to receipt of the block ACK request frame may contain a valid SEN. For example, the STA 412 may tweak the SEN such that the SEN is valid to trick the network device 400/401 into thinking the STA 412 is functioning normally and is not being used to carry out a DoS attack on the network device 400/401. However, in order to counter scenarios in which the STA 412 transmits a transmission frame containing a valid SEN in response to the block ACK request from the network device 400/401, the network device 400/401 may not reset the counter subsequent to receipt of the transmission frame containing the valid SEN at time t₅. For example, by not resetting the counter in response to receipt of the transmission frame containing the valid SEN, the network device 400/401 may monitor transmission from the STA 412 over time to determine whether or not to deauthenticate the STA 412. Examples are not so limited, however, and in some examples, the network device 400/401 may increment the counter subsequent to receipt of the transmission frame containing the valid SEN at time t₅.

After the counter is incremented, the network device 400/401 may determine whether the counter has reached a threshold number. If the network device 400/401 determines that the counter has not reached the threshold number of received transmission frames containing the invalid SEN, the STA 412 may transmit another transmission frame containing an invalid SEN at time t₇. The transmission frame containing the invalid SEN that is transmitted from the STA 412 at time t₇ may be received by the network device 400/401 at time t₈.

At time t₈, the network device 400/401 may increment the counter in response to receipt of the transmission frame containing the invalid SEN that was transmitted by the STA 412 at time t₆. If the network device 400/401 determines that the counter has been incremented to the threshold number of received transmission frames, at time t₉, the network device 400/401 may transmit a deauthentication frame to the STA 412, which may be received by the STA 412. In some examples, the deauthentication frame may cause the STA 412 to be disassociated from the network device 400/401 at time t₁₀.

By disassociating the STA 412 from the network device 400/401 in response to receipt of a threshold number of transmission frames, performance of the network device 400/401 may be improved in comparison to approaches that do not utilize a counter to keep track of the number of frames with valid and invalid SENs received by the network device 400/401. For example, channel busy time of the network device 400/401 may be reduced by disassociating the STA 412 from the network device 400/401 in response to receipt of a threshold number of transmission frames, which may allow for a decrease in RF resource starvation in comparison to approaches in which the STA 412 is not disassociated from the network device 400/401 in response to the counter being incremented to a threshold value.

In some examples, the threshold number of frames detected by the counter may be based on a number of unsuccessful transmission frames (e.g., transmission frames containing an invalid SEN) and a number of successful transmission frames (e.g., transmission frames containing a valid SEN in response to the block ACK request). This may allow for the network device 400/401 to more accurately distinguish between a STA 412 that is attempting to carry out a DoS attack versus a STA that is not, thereby reducing the risk of disassociating STAs from the network device 400/401 that should not be disassociated therefrom.

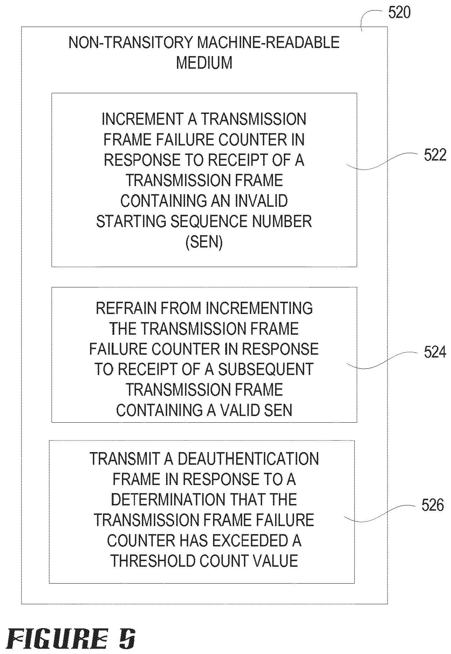

Figure 5 illustrates an example machine-readable medium 520 for a transmission frame counter consistent with the disclosure. A processing resource (e.g., processing resource 102 illustrated in Figure 1 or processing resource 202 illustrated in Figure 2, herein) such as a hardware computer processor may execute instructions stored on the non-transitory machine readable medium 520. The non-transitory machine readable medium 520 may be any type of volatile or non-volatile memory or storage, such as random-access memory (RAM), flash memory, read-only memory (ROM), storage volumes, a hard disk, or a combination thereof.

The example medium 520 may store instructions 522 executable by the processing resource to increment a transmission frame failure counter in response to receipt of a transmission frame containing an invalid starting sequence number (SEN). In some examples, the transmission frame failure counter corresponds to a particular station (STA) transmitting the transmission frame. For example, transmission frames may be received from a plurality of STAs associated to a network device on which the example medium is executed and the instructions may be executable to increment a plurality of transmission frame failure counters each corresponding to a particular STA associated to the network device. The transmission frame failure counter may be analogous to transmission frame failure counter 208 illustrated in Figure 2, herein.

The example medium 520 may further store instructions 524 executable by the processing resource to refrain from incrementing the transmission frame failure counter in response to receipt of a subsequent transmission frame containing a valid SEN. In some examples, the subsequent transmission frame containing the valid SEN may be transmitted by a STA in response to receipt of a block ACK request frame transmitted by a network device such as network device 300/301 illustrated in Figure 3 or network device 400/401 illustrated in Figure 4, herein.

The example medium 520 may further store instructions 526 executable by the processing resource to transmit a deauthentication frame to the particular STA in response to a determination that the transmission frame failure counter has exceeded a threshold count value. The threshold count value may, in some examples, be based on a number of successful transmission frames (e.g., transmission frames containing a valid SEN) compared to a number of unsuccessful transmission frames (e.g., transmission frames containing a valid SEN).

As described above, the deauthentication frame may disassociate a STA that receives the deauthentication frame from a network device such as an AP. In some examples, the example medium 520 may store instructions executable by the processing resource to determine a source of the transmission frame containing the invalid SEN and block subsequent transmission frames from the source for a configurable period of time.

In some examples, the example medium 520 may store instructions executable by the processing resource to transmit a block acknowledgment request in response to a determination that the network device has received a threshold number of transmission frames containing the invalid SEN and/or increment the transmission frame failure counter in response to a determination that the network device has received a transmission frame containing a valid SEN subsequent to transmission of the block acknowledgment request.

In some examples, the example medium 520 may store instructions executable by the processing resource to transmit a block acknowledgment request in response to a determination that the transmission frame failure counter has received a threshold number of transmission frames containing the invalid SEN and/or increment the transmission frame failure counter in response to a determination that the network device has received a transmission frame containing an invalid SEN subsequent to transmission of the block acknowledgment request. The example medium 520 may store instructions executable by the processing resource to transmit a block acknowledgment request subsequent to receipt of one or more block ACK frames containing an invalid SEN responsive to transmission of data frames from the network device. For example, the network device may retry transmission of negatively ACKed transmission frames prior to transmission of the block ACK request.

The example medium 520 may further store instruction executable by the processing resource to cause the system to determine the threshold number of transmission frames containing the invalid SEN based, at least in part, on a quantity of attempted transmission frames and a quantity of successful transmission frames, as described in more detail herein.

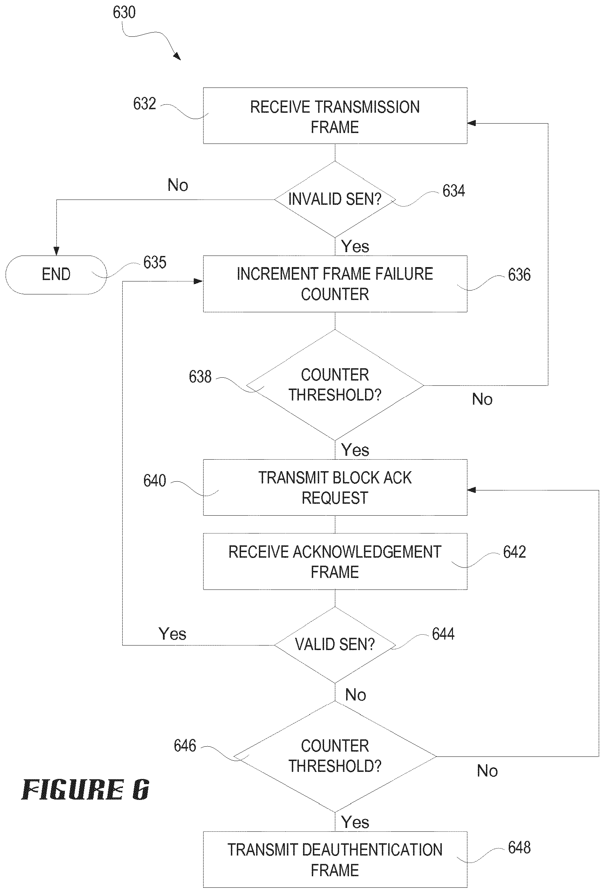

Figure 6 illustrates an example flow diagram 630 for a transmission frame counter consistent with the disclosure. At block 632, a transmission frame may be received. The transmission frame may be received to a network device (e.g., the NETWORK DEVICE 300/301, or the NETWORK DEVICE 400/401 described in connection with Figures 3 and 4, which may be analogous to the apparatus 100 illustrated in Figure 1 and/or the system 201 illustrated in Figure 2, herein).

At block 634, a determination may be made as to whether the transmission frame contains an invalid starting sequence number (SEN). In some examples, the determination may be made by a frame determination component such as the frame determination component 106 illustrated in Figure 1 or the frame determination component 206 illustrated in Figure 2, as described herein. If the transmission frame does not contain an invalid SEN, at block 635 the process may end. If the transmission frame contains an invalid SEN, at block 636 a transmission frame failure counter (e.g., transmission frame failure counter 208 illustrated and described in connection with Figure 2) may be incremented.

In some examples, the transmission frame failure counter may have a plurality of counter thresholds corresponding thereto. For example, the transmission frame failure counter may have a first threshold corresponding to a number of transmission frames including an invalid SEN received thereby. In addition, the transmission frame failure counter may have a second threshold corresponding to a number of transmission frames received in response to transmission of a block ACK request, as described in more detail in connection with block 646 herein. Examples are not limited to a first and second threshold, however, and the transmission frame failure counter may have any number of threshold values.

At block 638, if the transmission failure counter threshold has not been exceeded, another transmission frame may be received, as shown at block 632. If the transmission failure counter has been exceeded, at block 640, a block acknowledgment (ACK) request may be transmitted. Responsive to transmission of the block ACK request, at block 642, an ACK frame may be received.

At block 644, a determination may be made as to whether the ACK frame received in response to the block ACK request contains a valid SEN. If the ACK frame received in response to the block ACK request frame contains a valid SEN, the frame failure counter may be incremented as shown at block 636. If the ACK frame received in response to the block ACK request frame contains an invalid SEN, a determination as to whether the transmission failure counter threshold has been reached may be made at block 646.

If the transmission failure counter threshold has not been reached, a subsequent transmission frame may be received, as shown at block 632. If the transmission failure counter threshold has been reached, in some examples, a deauthentication frame may be transmitted to disassociate the source of the transmission frames.

In the foregoing detailed description of the disclosure, reference is made to the accompanying drawings that form a part hereof, and in which is shown by way of illustration how examples of the disclosure may be practiced. These examples are described in sufficient detail to enable those of ordinary skill in the art to practice the examples of this disclosure, and it is to be understood that other examples may be utilized and that process, electrical, and/or structural changes may be made without departing from the scope of the disclosure. As used herein, designators such as "N", etc., particularly with respect to reference numerals in the drawings, indicate that a number of the particular feature so designated can be included. A "plurality of" is intended to refer to more than one of such things. Multiple like elements may be referenced herein by their reference numeral without a specific identifier at the end.

The figures herein follow a numbering convention in which the first digit corresponds to the drawing figure number and the remaining digits identify an element or component in the drawing. For example, reference numeral 102 may refer to element "02" in Figure 1 and an analogous element may be identified by reference numeral 202 in Figure 2. Elements shown in the various figures herein can be added, exchanged, and/or eliminated so as to provide a number of additional examples of the disclosure. In addition, the proportion and the relative scale of the elements provided in the figures are intended to illustrate the examples of the disclosure, and should not be taken in a limiting sense.

## Claims

1. An apparatus (201), comprising:
a processing resource (202) operatively coupled to a memory resource (204);
a frame determination component (206) operatively coupled to the processing resource (202) and the memory resource (204), wherein the frame determination component (206) is to cause:
a counter (208) corresponding to a particular station, STA, associated to the apparatus (201) to be stored in the memory resource (204), the counter (208) to be incremented (636) in response to receipt of a transmission frame from the particular STA, containing an invalid starting sequence number, SEN;
a block acknowledgement request to be transmitted (640) to the particular station in response to receipt of a threshold number of transmission frames from the particular STA, containing the invalid SEN; and
the transmission frame failure counter to be incremented (636) in response to receipt of a transmission frame, from the particular station, containing a valid SEN subsequent to transmission of the block acknowledgement request.

2. The apparatus of claim 1, wherein:
the frame determination component is to cause the counter stored by the memory resource to be incremented in response to receipt of a transmission frame containing the invalid SEN subsequent to transmission of the block acknowledgement request.

3. The apparatus of claim 1, wherein the frame determination component is to cause a deauthentication frame to be transmitted in response to receipt of a threshold number of transmission frames containing the invalid SEN.

4. The apparatus of claim 3, wherein the frame determination component is to cause transmission frames received subsequent to transmission of the deauthentication frame to be blocked.

5. The apparatus of claim 1, wherein the threshold number of transmission frames containing the invalid SEN is based, at least in part, on a quantity of attempted transmission frames and a quantity of successful transmission frames.

6. The apparatus of claim 1, wherein the transmission frame containing the invalid SEN comprises a block acknowledgement frame.

7. A system, comprising:
an antenna (210) to receive a plurality of transmission frames corresponding to particular stations, STAs, among a plurality of STAs associated to the system; and
a frame determination component (206) operatively coupled to a processing resource (202) and a memory resource (204), the frame determination component (206) comprising a plurality of transmission frame failure counters (208) each corresponding to a respective STA among the plurality of STAs, wherein the frame determination component (206) is to cause:
a determination to be made (634) that a transmission frame from a first STA among the plurality of STAs includes an invalid starting sequence number, SEN;
a first transmission frame failure counter corresponding to the first STA among the plurality of STAs stored by the memory resource (204) to be incremented (636) in response to the determination that the transmission frame received from the first STA among the plurality of STAs includes the invalid SEN;
a block acknowledgement request to be transmitted (640) to the first STA among the plurality of STAs in response to receipt of a threshold number of transmission frames, from the first STA among the plurality of STAs, containing the invalid SEN; and
the transmission frame failure counter to be incremented (636) in response to receipt of a transmission frame received from the first STA among the plurality of STAs containing a valid SEN subsequent to transmission of the block acknowledgement request.

8. The system of claim 7, wherein the frame determination component is to:
cause the transmission frame failure counter to be incremented in response to receipt of a transmission frame containing an invalid SEN subsequent to receipt of the transmission frame containing the valid SEN; or
cause a deauthentication frame to be transmitted in response to the transmission frame failure counter being incremented to a threshold counter value.

9. The system of claim 7, wherein the frame determination component is to:
cause transmission frames that include the invalid SEN to be blocked based, at least in part, on the quantity of attempted transmission frames and the quantity of successful transmission frames; and/or.
determine a source of the transmission frames that include the invalid SEN; and
store identification information corresponding to the source in a media access control blacklist stored in the memory resource.

10. The system of claim 7, wherein the threshold number of transmission frames that include the invalid SEN is based, at least in part, on a quantity of attempted transmission frames and a quantity of successful transmission frames.

11. A non-transitory, machine-readable medium (520) storing instructions executable by a processing resource (202) of a system to cause the system to:
increment (636) a transmission frame failure counter in response to receipt of a transmission frame containing an invalid starting sequence number, SEN, wherein the transmission frame failure counter corresponds to a particular station, STA, transmitting the transmission frame;
transmit (640) a block acknowledgement request to the particular STA in response to receipt of a threshold number of transmission frames containing the invalid SEN, from the particular STA; and
increment (636) the transmission frame failure counter in response to receipt of a transmission frame from the particular STA, containing a valid SEN subsequent to transmission of the block acknowledgement request.

12. The medium of claim 11, wherein the instructions are further executable by the processing resource to cause the system to:
transmit a deauthentication frame to the particular STA in response to a determination that the transmission frame failure counter has exceeded a threshold count value.

13. The medium of claim 11, wherein the instructions are further executable by the processing resource to:
cause the system to:
refrain from incrementing the transmission frame failure counter in response to a determination that the transmission frame counter has received the transmission frame containing the valid SEN in response to the block acknowledgment request;
or to cause the system to:
increment the transmission frame failure counter in response to a determination that the transmission frame counter has received a transmission frame containing an invalid SEN subsequent to transmission of the block acknowledgment request.

14. The medium of claim 11, wherein the instructions are further executable by the processing resource to cause the system to determine the threshold number of transmission frames containing the invalid SEN based, at least in part, on a quantity of attempted transmission frames and a quantity of successful transmission frames.

15. The medium of claim 11, wherein the instructions are further executable by the processing resource to cause the system to block subsequent transmission frames from the particular STA for a configurable period of time subsequent to transmission of the deauthentication frame to the particular STA.

## Patentansprüche

1. Vorrichtung (201), die Folgendes umfasst:
eine Verarbeitungsressource (202), die wirksam mit einer Speicherressource (204) gekoppelt ist;
eine Rahmenbestimmungskomponente (206), die wirksam mit der Verarbeitungsressource (202) und der Speicherressource (204) gekoppelt ist, wobei die Rahmenbestimmungskomponente (206) dazu dient, Folgendes zu veranlassen:
dass ein Zähler (208), der einer speziellen Station (STA) entspricht, die der Vorrichtung (201) zugeordnet ist, in der Speicherressource (204) gespeichert wird, wobei der Zähler (208) als Reaktion auf einen Empfang eines Übertragungsrahmens, der eine ungültige Startsequenznummer (SEN) enthält, von der speziellen STA inkrementiert wird (636);
dass eine Blockbestätigungsanforderung als Reaktion auf einen Empfang einer Schwellenzahl von Übertragungsrahmen, die die ungültige SEN enthalten, von der speziellen STA an die spezielle Station übertragen wird (640); und
dass der Übertragungsrahmenfehlerzähler als Reaktion auf einen Empfang eines Übertragungsrahmens, der eine gültige SEN enthält, von der speziellen Station anschließend an die Übertragung der Blockbestätigungsanforderung inkrementiert wird (636).

2. Vorrichtung nach Anspruch 1, wobei:
die Rahmenbestimmungskomponente dazu dient, zu veranlassen, dass der durch die Speicherressource gespeicherte Zähler als Reaktion auf den Empfang eines Übertragungsrahmens, der die ungültige SEN enthält, anschließend an die Übertragung der Blockbestätigungsanforderung inkrementiert wird.

3. Vorrichtung nach Anspruch 1, wobei die Rahmenbestimmungskomponente dazu dient, zu veranlassen, dass ein Deauthentifizierungsrahmen als Reaktion auf den Empfang einer Schwellenzahl von Übertragungsrahmen, die die ungültige SEN enthalten, übertragen wird.

4. Vorrichtung nach Anspruch 3, wobei die Rahmenbestimmungskomponente dazu dient, zu veranlassen, dass Übertragungsrahmen, die anschließend an die Übertragung des Deauthentifizierungsrahmens empfangen werden, blockiert werden.

5. Vorrichtung nach Anspruch 1, wobei die Schwellenzahl von Übertragungsrahmen, die die ungültige SEN enthalten, wenigstens teilweise auf einer Anzahl von versuchten Übertragungsrahmen und einer Anzahl von erfolgreichen Übertragungsrahmen basiert.

6. Vorrichtung nach Anspruch 1, wobei der Übertragungsrahmen, der die ungültige SEN enthält, einen Blockbestätigungsrahmen umfasst.

7. System, das Folgendes umfasst:
eine Antenne (210), um mehrere Übertragungsrahmen zu empfangen, die speziellen Stationen (STAs) aus mehreren STAs, die dem System zugeordnet sind, entsprechen; und
eine Rahmenbestimmungskomponente (206), die wirksam mit einer Verarbeitungsressource (202) und einer Speicherressource (204) gekoppelt ist, wobei die Rahmenbestimmungskomponente (206) mehrere Übertragungsrahmenfehlerzähler (208) umfasst, die jeweils einer jeweiligen STA aus den mehreren STAs entsprechen, wobei die Rahmenbestimmungskomponente (206) dazu dient, Folgendes zu veranlassen:
dass eine Bestimmung erstellt wird (634), dass ein Übertragungsrahmen von einer ersten STA aus den mehreren STAs eine ungültige Startsequenznummer (SEN) einschließt;
dass ein erster Übertragungsrahmenfehlerzähler, der der ersten STA aus den mehreren STAs entspricht, die durch die Speicherressource (204) gespeichert werden, als Reaktion auf die Bestimmung, dass der von der ersten STA aus den mehreren STAs empfangene Übertragungsrahmen die ungültige SEN einschließt, inkrementiert wird (636);
dass eine Blockbestätigungsanforderung als Reaktion auf einen Empfang einer Schwellenzahl von Übertragungsrahmen, die die ungültige SEN enthalten, von der ersten STA aus den mehreren STAs, an die erste STA aus den mehreren STAs übertragen wird (640); und
dass der Übertragungsrahmenfehlerzähler als Reaktion auf einen Empfang eines Übertragungsrahmens, der eine gültige SEN enthält, der von der ersten STA aus den mehreren STAs empfangen wurde, anschließend an die Übertragung der Blockbestätigungsanforderung inkrementiert wird (636).

8. System nach Anspruch 7, wobei die Rahmenbestimmungskomponente zu Folgendem dient:
Veranlassen, dass der Übertragungsrahmenfehlerzähler als Reaktion auf den Empfang eines Übertragungsrahmens, der eine ungültige SEN enthält, anschließend an den Empfang des Übertragungsrahmens, der die gültige SEN enthält, inkrementiert wird; oder
Veranlassen, dass ein Deauthentifizierungsrahmen als Reaktion darauf übertragen wird, dass der Übertragungsrahmenfehlerzähler auf einen Schwellenwertzählerwert inkrementiert wird.

9. System nach Anspruch 7, wobei die Rahmenbestimmungskomponente zu Folgendem dient:
Veranlassen, dass Übertragungsrahmen, die die ungültige SEN einschließen, wenigstens teilweise auf der Basis der Anzahl von versuchten Übertragungsrahmen und der Anzahl von erfolgreichen Übertragungsrahmen blockiert werden; und/oder.
Bestimmen einer Quelle der Übertragungsrahmen, die die ungültige SEN einschließen; und
Speichern von Identifikationsinformationen, die der Quelle in einer in der Speicherressource gespeicherten Ausschlussliste für eine Medienzugriffssteuerung entsprechen.

10. System nach Anspruch 7, wobei die Schwellenzahl von Übertragungsrahmen, die die ungültige SEN einschließen, wenigstens teilweise auf einer Anzahl von versuchten Übertragungsrahmen und einer Anzahl von erfolgreichen Übertragungsrahmen basiert.

11. Nichtflüchtiges maschinenlesbares Medium (520), das Anweisungen speichert, die durch eine Verarbeitungsressource (202) eines Systems ausführbar sind, um das System zu Folgendem zu veranlassen:
Inkrementieren (636) eines Übertragungsrahmenfehlerzählers als Reaktion auf den Empfang eines Übertragungsrahmens, der eine ungültige Startsequenznummer (SEN) enthält, wobei der Übertragungsrahmenfehlerzähler einer speziellen Station (STA) entspricht, die den Übertragungsrahmen überträgt;
Übertragen (640) einer Blockbestätigungsanforderung als Reaktion auf einen Empfang einer Schwellenzahl von Übertragungsrahmen, die die ungültige SEN enthalten, von der speziellen STA an die spezielle STA; und
Inkrementieren (636) des Übertragungsrahmenfehlerzählers als Reaktion auf einen Empfang anschließend an die Übertragung der Blockbestätigungsanforderung eines Übertragungsrahmens, der eine gültige SEN enthält, von der speziellen Station.

12. Medium nach Anspruch 11, wobei die Anweisungen ferner durch die Verarbeitungsressource ausführbar sind, um das System zu Folgendem zu veranlassen:
Übertragen eines Deauthentifizierungsrahmens als Reaktion auf eine Bestimmung, dass der Übertragungsrahmenfehlerzähler einen Schwellenwertzählerwert überschritten hat, an die spezielle STA.

13. Medium nach Anspruch 11, wobei die Anweisungen ferner durch die Verarbeitungsressource zu Folgendem ausführbar sind:
Veranlassen des Systems zu Folgendem:
Unterlassen eines Inkrementierens des Übertragungsrahmenfehlerzählers als Reaktion auf eine Bestimmung, dass der Übertragungsrahmenzähler den Übertragungsrahmen, der die gültige SEN enthält, als Reaktion auf die Blockbestätigungsanforderung empfangen hat;
oder Veranlassen des Systems zu Folgendem:
Inkrementieren des Übertragungsrahmenfehlerzählers als Reaktion auf eine Bestimmung, dass der Übertragungsrahmenzähler einen Übertragungsrahmen, der eine ungültige SEN enthält, anschließend an die Übertragung der Blockbestätigungsanforderung empfangen hat.

14. Medium nach Anspruch 11, wobei die Anweisungen ferner durch die Verarbeitungsressource ausführbar sind, um das System zu veranlassen, die Schwellenzahl von Übertragungsrahmen, die die ungültige SEN enthalten, wenigstens teilweise auf der Basis einer Anzahl von versuchten Übertragungsrahmen und einer Anzahl von erfolgreichen Übertragungsrahmen zu bestimmen.

15. Medium nach Anspruch 11, wobei die Anweisungen ferner durch die Verarbeitungsressource ausführbar sind, um das System zu veranlassen, anschließende Übertragungsrahmen von der speziellen STA für einen konfigurierbaren Zeitraum anschließend an die Übertragung des Deauthentifizierungsrahmens an die spezielle STA zu blockieren.

## Revendications

1. Appareil (201), comprenant :
une ressource de traitement (202) couplée fonctionnellement à une ressource de mémoire (204) ;
un composant de détermination de trame (206) couplé fonctionnellement à la ressource de traitement (202) et à la ressource de mémoire (204), le composant de détermination de trame (206) devant amener :
un compteur (208) correspondant à une station, STA, particulière, associée à l'appareil (201) devant être stocké dans la ressource de mémoire (204), le compteur (208) devant être incrémenté (636) en réponse à la réception d'une trame de transmission provenant de la STA particulière, contenant un numéro de séquence de départ, SEN, non valide ;
une demande d'accusé de réception de bloc devant être transmise (640) à la station particulière en réponse à la réception d'un nombre seuil de trames de transmission provenant de la STA particulière, contenant le SEN non valide ; et
le compteur de défaillances de trame de transmission devant être incrémenté (636) en réponse à la réception d'une trame de transmission de la station particulière, contenant un SEN valide après la transmission de la demande d'accusé de réception de bloc.

2. Appareil selon la revendication 1, dans lequel :
le composant de détermination de trame doit amener le compteur stocké par la ressource de mémoire devant être incrémenté en réponse à la réception d'une trame de transmission contenant le SEN non valide après la transmission de la demande d'accusé de réception de bloc.

3. Appareil selon la revendication 1, dans lequel le composant de détermination de trame doit amener une trame de désauthentification devant être transmise en réponse à la réception d'un nombre seuil de trames de transmission contenant le SEN non valide.

4. Appareil selon la revendication 3, dans lequel le composant de détermination de trame doit amener le blocage des trames de transmission reçues après la transmission de la trame de désauthentification.

5. Appareil selon la revendication 1, dans lequel le nombre seuil de trames de transmission contenant le SEN non valide est basé, au moins en partie, sur une quantité de trames de transmission tentées et une quantité de trames de transmission réussies.

6. Appareil selon la revendication 1, dans lequel la trame de transmission contenant le SEN non valide comprend une trame d'accusé de réception de bloc.

7. Système, comprenant :
une antenne (210) pour recevoir une pluralité de trames de transmission correspondant à des stations, STA, particulières, parmi une pluralité de STA associées au système ; et
un composant de détermination de trame (206) couplé fonctionnellement à une ressource de traitement (202) et à une ressource de mémoire (204), le composant de détermination de trame (206) comprenant une pluralité de compteurs de défaillance de trame de transmission (208) correspondant chacun à une STA respective parmi la pluralité de STA, le composant de détermination de trame (206) devant amener :
une détermination devant être effectuée (634) du fait qu'une trame de transmission à partir d'une première STA parmi la pluralité de STA comporte un numéro de séquence de départ, SEN, non valide ;
un premier compteur de défaillances de trame de transmission correspondant à la première STA parmi la pluralité de STA stockées par la ressource de mémoire (204) devant être incrémenté (636) en réponse à la détermination du fait que la trame de transmission reçue en provenance de la première STA parmi la pluralité de STA comporte le SEN non valide ;
une demande d'accusé de réception de bloc devant être transmise (640) à la première STA parmi la pluralité de STA en réponse à la réception d'un nombre seuil de trames de transmission, en provenance de la première STA parmi la pluralité de STA, contenant le SEN non valide ; et
le compteur de défaillances de trame de transmission devant être incrémenté (636) en réponse à la réception d'une trame de transmission reçue en provenance de la première STA parmi la pluralité de STA contenant un SEN valide après la transmission de la demande d'accusé de réception de bloc.

8. Système selon la revendication 7, dans lequel le composant de détermination de trame doit :
amener le compteur de défaillances de trame de transmission à être incrémenté en réponse à la réception d'une trame de transmission contenant un SEN non valide après la réception de la trame de transmission contenant le SEN valide ; ou
amener la transmission d'une trame de désauthentification en réponse à l'incrémentation du compteur de défaillances de trame de transmission à une valeur de compteur seuil.

9. Système selon la revendication 7, dans lequel le composant de détermination de trame doit :
amener les trames de transmission qui comportent le SEN non valide à être bloquées en fonction, au moins en partie, de la quantité de trames de transmission tentées et de la quantité de trames de transmission réussies ; et/ou.
déterminer une source des trames de transmission qui comportent le SEN non valide ; et
stocker des informations d'identification correspondant à la source dans une liste noire de contrôle d'accès au support stockée dans la ressource de mémoire.

10. Système selon la revendication 7, dans lequel le nombre seuil de trames de transmission qui comportent le SEN non valide est basé, au moins en partie, sur une quantité de trames de transmission tentées et une quantité de trames de transmission réussies.

11. Support non transitoire lisible par machine (520) stockant des instructions exécutables par une ressource de traitement (202) d'un système pour amener le système à :
incrémenter (636) un compteur de défaillances de trame de transmission en réponse à la réception d'une trame de transmission contenant un numéro de séquence de départ, SEN, non valide, le compteur de défaillances de trame de transmission correspondant à une station, STA, particulière émettant la trame de transmission ;
transmettre (640) une demande d'accusé de réception de bloc à la STA particulière en réponse à la réception d'un nombre seuil de trames de transmission contenant le SEN non valide, en provenance de la STA particulière ; et
incrémenter (636) le compteur de défaillances de trame de transmission en réponse à la réception d'une trame de transmission de la STA particulière, contenant un SEN valide après la transmission de la demande d'accusé de réception de bloc.

12. Support selon la revendication 11, dans lequel les instructions sont en outre exécutables par la ressource de traitement pour amener le système à :
transmettre une trame de désauthentification à la STA particulière en réponse à une détermination que le compteur de défaillances de trame de transmission a dépassé une valeur de comptage seuil.

13. Support selon la revendication 11, dans lequel les instructions sont en outre exécutables par la ressource de traitement pour :
amener le système à :
s'abstenir d'incrémenter le compteur de défaillances de trame de transmission en réponse à une détermination que le compteur de trames de transmission a reçu la trame de transmission contenant le SEN valide en réponse à la demande d'accusé de réception de bloc ;
ou pour amener le système à :
incrémenter le compteur de défaillances de trame de transmission en réponse à une détermination du fait que le compteur de trames de transmission a reçu une trame de transmission contenant un SEN non valide après la transmission de la demande d'accusé de réception de bloc.

14. Support selon la revendication 11, dans lequel les instructions sont en outre exécutables par la ressource de traitement pour amener le système à déterminer le nombre seuil de trames de transmission contenant le SEN non valide en fonction, au moins en partie, d'une quantité de trames de transmission tentées et d'un quantité de trames de transmission réussies.

15. Support selon la revendication 11, dans lequel les instructions sont en outre exécutables par la ressource de traitement pour amener le système à bloquer les trames de transmission suivantes à partir de la STA particulière pendant une période de temps configurable après la transmission de la trame de désauthentification au STA particulier.
